# EUROPEAN PATENT APPLICATION

(11) **EP 4 596 181 A1**
(43) Date of publication of application: **06.08.2025**
(21) Application number: 25154527.3
(22) Date of filing: 28.01.2025
(51) Int. Cl.: B25J 9/16

(54) **METHOD, APPARATUS, DEVICE AND COMPUTER MEDIUM FOR TASK EXECUTION**

(30) Priority: 01.02.2024 CN 202410145231
(71) Applicant: BEIJING YOUZHUJU NETWORK TECHNOLOGY CO. LTD., Beijing 101299 (CN)
(72) Inventor: ZHANG, Hanbo, Beijing, 100028 (CN); XU, Jie, Beijing, 100028 (CN); KONG, Tao, Beijing, 100028 (CN)
(74) Representative: Grünecker Patent- und Rechtsanwälte PartG mbB

(57) **Abstract**

The application discloses a method, an apparatus, a device, and a computer medium for task execution. The method of task execution is applicable to an intelligent robot and includes: obtaining a target task; determining target object information required for completing the target task based on the target task, the target object information including at least one object; generating a plurality of sub-tasks to be executed for completing the target task based on the target object information, each sub-task including operation action information for a corresponding object; and controlling a gripping apparatus and a moving apparatus to collaborate to execute the plurality of sub-tasks to complete the target task, which can achieve the effect of improving the service efficiency of serving users.

## Description

### FIELD

The present application belongs to the technical field of intelligent control and, in particular, to a task execution method, an apparatus, a device, and a computer medium.

### BACKGROUND

With the continuous development of science and technology, artificial intelligence and robotics have been widely used in people's lives. Most existing robots can only execute simple tasks, which are difficult to meet the higher needs of users, cannot execute more complex tasks, and have low service efficiency for serving users.

### SUMMARY

The embodiments of the present application provide an implementation solution different from the related art to solve the technical problem in the related art that the task execution mode of the intelligent robot has low service efficiency for serving users.

In a first aspect, the present application provides a method of task execution, including: obtaining a target task; determining target object information required for completing the target task based on the target task, the target object information including at least one object; generating a plurality of sub-tasks to be executed for completing the target task based on the target object information, each sub-task including operation action information for a corresponding object; and controlling a gripping apparatus and a moving apparatus to collaborate to execute the plurality of sub-tasks to complete the target task.

In a second aspect, the present application provides an apparatus for task execution, including: an obtaining unit configured to obtain a target task; a determining unit configured to determine target object information required for completing the target task based on the target task, the target object information including at least one object; a generating unit configured to generate a plurality of sub-tasks to be executed for completing the target task based on the target object information, each sub-task including operation action information for a corresponding object; and a controlling unit configured to control a gripping apparatus and a moving apparatus to collaborate to execute the plurality of sub-tasks to complete the target task.

In a third aspect, the present application provides an electronic device, including: a processor; and a memory for storing executable instructions of the processor, where the processor is configured to perform any method in the first aspect or various possible implementations of the first aspect by executing the executable instructions.

In a fourth aspect, an embodiment of the present application provides a computer-readable storage medium having a computer program stored thereon, where, the computer program when executed by a processor implements any method in the first aspect or various possible implementations of the first aspect .

In a fifth aspect, an embodiment of the present application provides a computer program product including a computer program, where, the computer program when executed by a processor implements any method in the first aspect or various possible implementations of the first aspect.

In the solution provided in the present application, the target object information required for completing the target task may be analyzed first, then the target object information is analyzed to determine a plurality of sub-tasks to be executed for completing the target task, and the gripping apparatus and the moving apparatus are controlled to collaborate to execute the plurality of sub-tasks to complete the target task. The solution relates to the analysis of the target task and the key information, that is, the target object information, for completing the target task, and then the gripping apparatus and the moving apparatus are controlled to collaborate to execute the plurality of sub-tasks to complete the target task, thus providing a solution for executing a target task when a relatively complex target task is encountered, and improving the service efficiency of serving users.

### BRIEF DESCRIPTION OF THE DRAWINGS

In order to more clearly explain the technical solutions in the embodiments of the present application or in the related art, the following will briefly introduce the drawings that need to be used in the description of the embodiments or the related art. Obviously, the drawings in the following description are some embodiments of the present application, and for those of ordinary skill in the art, other drawings can be obtained based on these drawings without paying creative efforts. In the drawings:
FIG. 1 is a schematic structural diagram of a system for task execution according to an embodiment of the present application;
FIG. 2 is a schematic flowchart of a method of task execution according to an embodiment of the present application;
FIG. 3 is a schematic structural diagram of an apparatus for task execution according to an embodiment of the present application; and
FIG. 4 is a schematic structural diagram of an electronic device according to an embodiment of the present application.

### DETAILED DESCRIPTION

The embodiments of the present application are described in detail below, and examples of the embodiments are shown in the drawings. The embodiments described below with reference to the drawings are illustrative and are intended to explain the present application, but not to limit the present application.

The terms "first" and "second" in the specification, claims, and drawings of the embodiments of the present application are used to distinguish between similar objects, and are not necessarily used to describe a specific order or sequence. It should be understood that the data used in this way can be exchanged in appropriate circumstances, so that the embodiments of the present application described here can be implemented, for example, in an order other than those illustrated or described here. In addition, the terms "include/comprise" and "have" and any variations thereof are intended to cover non-exclusive inclusion. For example, a process, a method, a system, a product, or a device that includes a series of steps or units is not necessarily limited to those steps or units that are clearly listed, but may include other steps or units that are not clearly listed or that are inherent to these processes, methods, products, or devices.

The technical solutions of the present application and how the technical solutions of the present application solve the above technical problems are described in detail below with specific embodiments. The following specific embodiments can be combined with each other, and the same or similar concepts or processes may not be repeated in some embodiments. The embodiments of the present application will be described below with reference to the drawings.

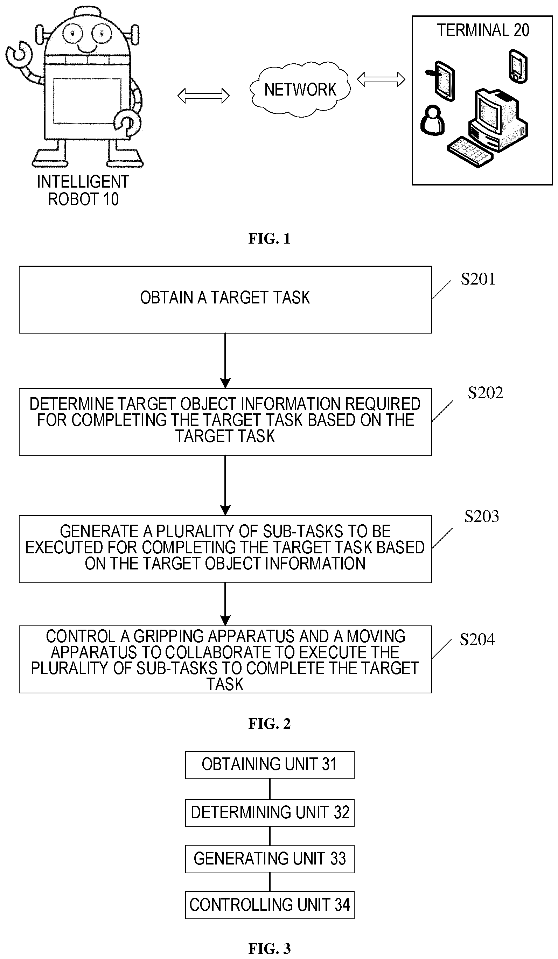

FIG. 1 is a schematic structural diagram of a system for task execution according to an example embodiment of the present application. The system may include an intelligent robot 10. The intelligent robot 10 may be configured to: obtain a target task; determine target object information required for completing the target task based on the target task, the target object information including at least one object; generate a plurality of sub-tasks to be executed for completing the target task based on the target object information, each sub-task including operation action information for a corresponding object; and control a gripping apparatus and a moving apparatus to collaborate to execute the plurality of sub-tasks to complete the target task.

The gripping apparatus and the moving apparatus may be part of the structure of the intelligent robot, where the gripping apparatus may be a structure with a gripping function, such as a gripper, and the moving apparatus may refer to the bottom wheels of the intelligent robot.

In some optional embodiments of the present application, the system may further include a terminal 20. The terminal 20 is configured to: obtain a target task; determine target object information required for completing the target task based on the target task, the target object information including at least one object; generate a plurality of sub-tasks to be executed for completing the target task based on the target object information, each sub-task including operation action information for a corresponding object; and send the plurality of sub-tasks to the intelligent robot 10, so that the intelligent robot 10 controls the gripping apparatus and the moving apparatus to collaborate to execute the plurality of sub-tasks to complete the target task.

For the execution principle and interaction process of each component unit in this system embodiment, reference may be made to the description of the following method embodiments.

Optionally, the scheme of the present application can be applicable to a home scenario. FIG. 2 is a schematic flowchart of a method of task execution according to an example embodiment of the present application. The method may be applicable to the terminal or the intelligent robot mentioned above, and may also be executed jointly by the terminal and the intelligent robot. The present application is not limited thereto. The method includes at least the following steps S201-S204:
S201, obtain a target task.

Optionally, the target task may be determined based on an instruction input by a related person, where the instruction may refer to a voice instruction, a gesture instruction, or an instruction triggered by display content of a display screen.

Specifically, the content of the target task may be included in indication information of the instruction.

Optionally, the target task refers to a task that can be completed by the intelligent robot based on its gripping function and moving function. It should be noted that the intelligent robot needs to recognize, based on a photographing apparatus, an object that needs to be recognized for completing the target task. Therefore, the intelligent robot also needs to use the photographing apparatus when completing the target task. Optionally, the photographing apparatus may be part of the intelligent robot, or may be a photographing apparatus other than the intelligent robot, which is not limited here.

Optionally, the intelligent robot implements the gripping function based on its gripping apparatus, and implements the moving function based on its moving apparatus.

In some optional embodiments, the target task may be any of the following tasks: a cleaning task, a cooking task, and a carrying task.

In some optional embodiments, when the category of the target task is a cooking task, the target task may be cooking a certain dish.

In some optional embodiments, when the category of the target task is a cleaning task, the target task may be cleaning a certain area.

In some optional embodiments, when the category of the target task is a carrying task, the target task may be carrying a certain object.

S202, determine target object information required for completing the target task based on the target task, the target object information including at least one object.

Optionally, the target object information may further include at least one object and an amount of the respective objects.

Optionally, the target object information may refer to an object required for completing the target task, and the object may be an external object other than the intelligent robot, such as a tool, a material, etc.

In some optional embodiments of the present application, when the target task is cooking a certain dish, the target object information is a material for the dish.

In some other optional embodiments of the present application, when the target task is carrying a certain object, the target object information is a carrying tool required for carrying the object.

In some optional embodiments, when the target task is cleaning a certain area, the target object information is a cleaning tool required for cleaning the area.

Optionally, in S202, determining the target object information required for completing the target task based on the target task may include: inputting the target task into a predetermined object determination model to obtain the target object information required for completing the target task.

Optionally, in S202, determining the target object information required for completing the target task based on the target task may further include: determining the target object information required for completing the target task based on the target task and a first predetermined correspondence relationship table. The first predetermined correspondence relationship table includes a plurality of tasks and object information required for completing the respective tasks, and the target task is included in the plurality of tasks.

In S202, determining the target object information required for completing the target task based on the target task includes the following S2021-S2022:
S2021, obtain user feature information of a related person.

In some optional embodiments of the present application, the related person is a user corresponding to the target task, and specifically may be a user who inputs the aforementioned instruction.

Optionally, the user feature information is unique feature information for identifying the related person.

The user feature information may include any one or more of the following: age information, facial image information, and name information.

S2022, determine the target object information required for completing the target task based on the user feature information and the target task.

In some optional embodiments of the present application, in S2022, determining the target object information required for completing the target task based on the user feature information and the target task includes the following S20221-S20222:
S20221, determine an object preference of a user based on the user feature information and the target task.

The object preference specifically refers to preferred object information. Optionally, the preferred object information includes a preferred object, and/or a preferred object and an amount of the preferred object.

S20222, determine the target object information required for completing the target task based on the object preference.

Optionally, in S20222, determining the target object information required for completing the target task based on the object preference includes the following S221-S222:
S221, determine initial object information required for completing the target task based on the target task.

S222, adjust the initial object information based on the object preference to obtain the target object information required for completing the target task.

In some optional embodiments of the present application, the initial object information may include a plurality of objects.

In some optional embodiments of the present application, the initial object information may include a plurality of objects and an amount of the respective objects.

Optionally, when the object preference includes the plurality of objects and an amount of the respective objects, in S222, adjusting the initial object information based on the object preference to obtain the target object information required for completing the target task includes: selecting a target object corresponding to the object preference from the plurality of objects included in the initial object information; and adjusting an amount of the target object in the initial object information to an amount of the target object in the object preference. The target object corresponding to the object preference refers to an object included in the object preference.

Optionally, determining the initial object information required for completing the target task based on the target task may include: inputting the target task into a predetermined object determination model to obtain the initial object information required for completing the target task.

Optionally, determining the target object information required for completing the target task based on the target task includes: determining the initial object information required for completing the target task based on the target task and a second predetermined correspondence relationship table, where the second predetermined correspondence relationship table includes a plurality of tasks and initial object information required for completing the respective tasks, and the target task is included in the plurality of tasks.

S203, generate a plurality of sub-tasks to be executed for completing the target task based on the target object information, each sub-task including operation action information for a corresponding object.

Optionally, the operation action information may include at least one of opening, placing, taking out, cleaning, moving, etc.

In some optional embodiments of the present application, in S203, generating the plurality of sub-tasks to be executed for completing the target task based on the target object information includes the following S2031-S2032:
S2031, obtain a plurality of predetermined action operation templates.

Optionally, the action operation template is an action operation template for instructing the gripping apparatus and/or the moving apparatus of the intelligent robot, such as at least two of opening, placing, taking out, cleaning, moving, etc.

S2032, input the plurality of action operation templates, the target object information, and the target task into a predetermined sub-task generation model to obtain the plurality of sub-tasks to be executed for completing the target task.

In some optional embodiments of the present application, the sub-task generation model is obtained by training based on sample data, where the sample data may include a sample action operation template, sample object information, a sample task, and a plurality of sample sub-tasks, where the plurality of sample sub-tasks may be sample labels in the model training process. The specific model training process will not be repeated here.

In some optional embodiments of the present application, a number of sub-tasks in the plurality of sub-tasks is greater than or equal to a number of action operation templates in the plurality of action operation templates.

S204, control the gripping apparatus and the moving apparatus to collaborate to execute the plurality of sub-tasks to complete the target task.

In some optional embodiments of the present application, in S204, controlling the gripping apparatus and the moving apparatus to collaborate to execute the plurality of sub-tasks to complete the target task includes: for each sub-task of the plurality of sub-tasks, performing the following steps S2041-S2042:
S2041, determine moving information of the moving apparatus and gripping information of the gripping apparatus based on the sub-task.

Optionally, the moving information of the moving apparatus and the gripping information of the gripping apparatus corresponding to the sub-task may be determined according to a predetermined association relationship table.

Optionally, determining the moving information of the moving apparatus and the gripping information of the gripping apparatus based on the sub-task includes: obtaining image information of an object corresponding to the sub-task; and determining the moving information of the moving apparatus and the gripping information of the gripping apparatus by using the image information.

Optionally, the image information of the object corresponding to the sub-task is image information that includes the object corresponding to the sub-task, the moving apparatus, and the gripping apparatus.

Optionally, determining the moving information of the moving apparatus and the gripping information of the gripping apparatus by using the image information includes: inputting the image information into an information generation model that is pre-trained to obtain the moving information of the moving apparatus and the gripping information of the gripping apparatus.

S2042, executing the sub-task based on the moving information and the gripping information to complete the target task.

In some optional embodiments of the present application, in S2042, executing the sub-tasks based on the moving information and the gripping information includes the following S0421-S0422:
S0421, control the moving apparatus to move based on the moving information, causing the moving apparatus to move to the corresponding object of the sub-task.

In some optional embodiments of the present application, the moving information includes: a target location of the corresponding object of the sub-task and an initial location of the moving apparatus.

In S0421, controlling the moving apparatus to move based on the moving information includes: controlling the moving apparatus to move from the initial location to the target location of the corresponding object of the sub-task.

S0422, control the gripping apparatus to grip the object based on the gripping information to execute the sub-task.

In some optional embodiments, the aforementioned gripping information may refer to a gripping angle, a gripping location, and a gripping force. Optionally, the gripping angle refers to an opening angle of a gripper of the gripping apparatus. The gripping location refers to a gripping location on a gripped object, such as an object corresponding to the sub-task, when the gripped object is gripped.

In some optional embodiments of the present application, the aforementioned plurality of sub-tasks have a timing relationship and an execution order.

In some optional embodiments of the present application, the method further includes the following S001-S002.

S001, obtain requirement information input by a related person.

In some optional embodiments of the present application, the requirement information input by the related person may be an instruction input by the related person.

S002, determine the target task based on the requirement information.

In some optional examples of the present application, when the target task is determined based on the requirement information, it can be implemented according to a model with language recognition capability, and then the target task to be executed can be determined according to the colloquial requirement information. For example, the requirement information may be: "I want to eat scrambled eggs with tomatoes", and the target task is: "cook a dish of scrambled eggs with tomatoes".

In some optional embodiments of the present application, the method further includes the following S01-S02.

S01, obtain an execution process for completing the target task.

S02, present the target object information and the execution process.

In some optional embodiments of the present application, when the target task is cooking a certain dish, the execution process of the target task refers to the cooking steps of the dish.

In some optional embodiments of the present application, when the target task is cleaning a certain area, the execution process of the target task is a cleaning sequence of cleaning rooms in the certain area.

In some optional embodiments of the present application, when the target task is carrying a certain object, the target object information is the carrying steps of carrying the object.

In some optional embodiments of the present application, after presenting the target object information and the execution process, the method further includes: obtaining an adjustment instruction of a user for the requirement information; and adjusting the requirement information based on the adjustment instruction to obtain the adjusted requirement information. In this case, in S002, determining the target task based on the requirement information refers to determining the target task based on the adjusted requirement information. The solution is further described below with reference to a specific scenario.

The aforementioned requirement information is: "I want to eat scrambled eggs with tomatoes".

The aforementioned target task is: "cook a dish of scrambled eggs with tomatoes".

The aforementioned target object information is: "2 tomatoes, 3 eggs, 50 g of oil, 1 green onion, 2 g-3 g of salt".

The aforementioned execution process may be:
1. Wash the tomatoes and cut them into small pieces for later use.
2. Beat the eggs into a bowl, add an appropriate amount of salt and sugar, and stir evenly.
3. Pour an appropriate amount of cooking oil into the pan, and pour in the egg liquid after the oil is hot.
4. Leave a little base oil in the pan, add green onion sections and stir-fry until fragrant.
5. Add tomato pieces and stir-fry evenly, and add an appropriate amount of light soy sauce for seasoning.
6. Finally, add the scrambled eggs and stir-fry evenly before serving.

The aforementioned multiple action operation templates may include: opening, placing, moving, taking out, cleaning, etc.

The multiple sub-tasks are:
1. Open the refrigerator.
2. Take out 2 tomatoes, 3 eggs, and 1 green onion.
3. Wash the tomatoes, eggs, and green onions.
4. Place 2 tomatoes, 3 eggs, and 1 green onion on a desktop material tray A.
5. Take out 50 g of oil.
6. Take out 2 g-3 g of salt.
7. Place 50 g of oil into a material tray B.
8. Place 2 g-3 g of salt into a material tray C.
9. Turn on the switch of an induction cooker.
10. When it is detected that the temperature of the induction cooker reaches a predetermined temperature, place 50 g of oil into the pan.
   m. Take out the cooked dish from the pan and place it into a dish plate.

Among them, some of the aforementioned multiple tasks are omitted and will not be repeated.

In the solution provided in the present application, the target object information required for completing the target task may be analyzed first, then the target object information is analyzed to determine a plurality of sub-tasks to be executed for completing the target task, and the gripping apparatus and the moving apparatus are controlled to collaborate to execute the plurality of sub-tasks to complete the target task. The solution relates to the analysis of the target task and the key information, that is, the target object information, for completing the target task, and then the gripping apparatus and the moving apparatus are controlled to collaborate to execute the plurality of sub-tasks to complete the target task, thus providing a solution for executing a target task when a relatively complex target task is encountered, and improving the service efficiency of serving users.

In addition, in the solution of the present application, the intelligent robot can understand and execute various personalized tasks, has high interpersonal interaction efficiency, and reduces human labor compared with previous methods. The practicability of the home robot can be greatly improved.

It can be understood that in the specific implementations of the present application, related data involving feature information of users, when the above embodiments of the present application are applicable to specific products or technologies, it is necessary to obtain user permission, consent or authorization, and the collection, use and processing of related data need to comply with relevant laws, regulations and standards of relevant countries and regions.

FIG. 3 is a schematic structural diagram of an apparatus for task execution according to an example embodiment of the present application, where the apparatus includes: an obtaining unit 31 configured to obtain a target task; a determining unit 32 configured to determine target object information required for completing the target task based on the target task, the target object information including at least one object; a generating unit 33 configured to generate a plurality of sub-tasks to be executed for completing the target task based on the target object information, each sub-task including operation action information for a corresponding object; and a control unit 34 configured to control a gripping apparatus and a moving apparatus to collaborate to execute the plurality of sub-tasks to complete the target task.

According to one or more embodiments of the present application, the apparatus is further configured to: obtain requirement information input by a related person; and determine the target task based on the requirement information.

According to one or more embodiments of the present application, the apparatus is further configured to: obtain an execution process of completing the target task; and present the target object information and the execution process.

According to one or more embodiments of the present application, the apparatus, when configured to generate the plurality of sub-tasks to be executed for completing the target task based on the target object information, is specifically configured to: obtain a plurality of predetermined action operation templates; and input the plurality of action operation templates, the target object information, and the target task into a predetermined sub-task generation model to obtain the plurality of sub-tasks to be executed for completing the target task.

According to one or more embodiments of the present application, the apparatus, when configured to control the gripping apparatus and the moving apparatus to collaborate to execute the plurality of sub-tasks to complete the target task, is specifically configured to: for each sub-task of the plurality of sub-tasks, determine moving information of the moving apparatus and gripping information of the gripping apparatus based on the sub-task; and execute the sub-task based on the moving information and the gripping information to complete the target task.

According to one or more embodiments of the present application, the apparatus, when configured to execute the sub-task based on the moving information and the gripping information, is specifically configured to: control the moving apparatus to move based on the moving information, causing the moving apparatus to move to a corresponding object of the sub-task; and control the gripping apparatus to grip the corresponding object based on the gripping information to execute the sub-task.

According to one or more embodiments of the present application, the moving information includes: a target location of the corresponding object of the sub-task and an initial location of the moving apparatus; and the apparatus, when configured to control the moving apparatus to move based on the moving information, is specifically configured to: control the moving apparatus to move from the initial location to the target location of the corresponding object of the sub-task.

According to one or more embodiments of the present application, the apparatus, when configured to determine the target object information required for completing the target task based on the target task, is specifically configured to: obtain user feature information of a related person; and determine the target object information required for completing the target task based on the user feature information and the target task.

According to one or more embodiments of the present application, the apparatus, when configured to determine the target object information required for completing the target task based on the user feature information and the target task, is specifically configured to: determine an object preference of a user based on the user feature information and the target task; and determine the target object information required for completing the target task based on the object preference.

It should be understood that apparatus embodiments may correspond to method embodiments, and reference may be made to the method embodiments for similar descriptions. To avoid repetition, details are not described herein again. Specifically, the apparatus may perform the above method embodiments, and the aforementioned and other operations and/or functions of each module in the apparatus are respectively used for corresponding processes in various methods in the above method embodiments, which will not be repeated here for the sake of brevity.

The apparatus of the embodiments of the present application has been described above from the perspective of functional modules with reference to the drawings. It should be understood that the functional modules may be implemented in hardware form, software form instructions, or a combination of hardware and software modules. Specifically, the steps of the method embodiments in the embodiments of the present application may be completed by hardware integrated logic circuits and/or software form instructions in a processor, and the steps of the method disclosed in the embodiments of the present application may be directly embodied as being completed by a hardware decoding processor, or completed by a combination of hardware and software modules in a decoding processor. Optionally, the software module may be located in a mature storage medium in the art such as a random-access memory, a flash memory, a read-only memory, a programmable read-only memory, an electrically erasable programmable read-only memory, a register, etc. The storage medium is located in the memory, and the processor reads information in the memory and completes the steps of the above method embodiments in combination with its hardware.

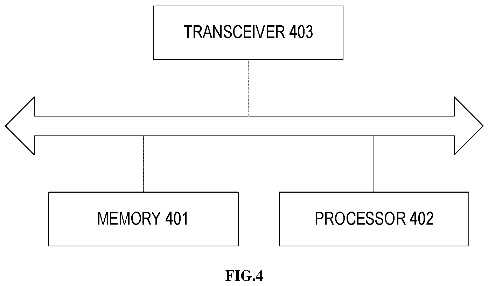

FIG. 4 is a schematic block diagram of an electronic device provided by an embodiment of the present application. The electronic device may include:
a memory 401 and a processor 402, where the memory 401 is configured to store a computer program and transmit the program code to the processor 402. In other words, the processor 402 may call and run the computer program from the memory 401 to implement the method in the embodiments of the present application.

For example, the processor 402 may be configured to perform the above method embodiments according to instructions in the computer program.

In some embodiments of the present application, the processor 402 may include but is not limited to: a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or other programmable logic devices, a discrete gate or transistor logic device, a discrete hardware component, and the like.

In some embodiments of the present application, the memory 401 includes but is not limited to: a volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random-access memory (Random Access Memory, RAM), which is used as an external cache. By way of example but not limitation, many forms of RAM are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synch link DRAM, SLDRAM), and a direct Rambus random access memory (Direct Rambus RAM, DR RAM).

In some embodiments of the present application, the computer program may be divided into one or more modules, and the one or more modules are stored in the memory 401 and executed by the processor 402 to complete the method provided in the present application. The one or more modules may be a series of computer program instruction segments capable of completing a specific function, and the instruction segments are used to describe an execution process of the computer program in the electronic device.

As shown in FIG. 4, the electronic device may further include: a transceiver 403, and the transceiver 403 may be connected to the processor 402 or the memory 401.

The processor 402 may control the transceiver 403 to communicate with other devices. Specifically, the transceiver 403 may send information or data to other devices, or receive information or data sent by other devices. The transceiver 403 may include a transmitter and a receiver. The transceiver 403 may further include an antenna, and the number of the antennas may be one or more.

It should be understood that components in the electronic device are connected by a bus system, where the bus system includes a power bus, a control bus, and a status signal bus in addition to a data bus.

The present application further provides a computer storage medium having a computer program stored thereon, where the computer program, when executed by the computer, enables the computer to execute the method of the above method embodiments. Alternatively, an embodiment of the present application further provides a computer program product including instructions, where the instructions, when executed by the computer, enable the computer to execute the method of the above method embodiments.

When implemented by software, the method can be implemented in whole or in part in the form of a computer program product. The computer program product includes one or more computer instructions. When the computer program instructions are loaded and executed on a computer, the procedures or functions according to the embodiments of the present application are generated in whole or in part. The computer may be a general computer, a special computer, a computer network, or other programmable devices. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (such as a coaxial cable, an optical fiber, a digital subscriber line (Digital Subscriber Line, DSL)) or a wireless manner (such as infrared, wireless, and microwave). The computer-readable storage medium may be any available medium that can be accessed by a computer or a data storage device such as a server or a data center integrating one or more available media. The available medium may be a magnetic medium (such as a floppy disk, a hard disk, and a tape), an optical medium (such as a digital video disc (Digital Video Disc, DVD)), or a semiconductor medium (such as a solid state disk (Solid State Disk, SSD)).

According to one or more embodiments of the present application, a method of task execution is provided, which is applicable to an intelligent robot and includes: obtaining a target task; determining target object information required for completing the target task based on the target task, the target object information including at least one object; generating a plurality of sub-tasks to be executed for completing the target task based on the target object information, each sub-task including operation action information for a corresponding object; and controlling a gripping apparatus and a moving apparatus to collaborate to execute the plurality of sub-tasks to complete the target task.

According to one or more embodiments of the present application, the method further includes: obtaining requirement information input by a related person; and determining the target task based on the requirement information.

According to one or more embodiments of the present application, the method further includes: obtaining an execution process for completing the target task; and presenting the target object information and the execution process.

According to one or more embodiments of the present application, generating the plurality of sub-tasks to be executed for completing the target task based on the target object information includes: obtaining a plurality of predetermined action operation templates; and inputting the plurality of action operation templates, the target object information, and the target task into a predetermined sub-task generation model to obtain the plurality of sub-tasks to be executed for completing the target task.

According to one or more embodiments of the present application, controlling the gripping apparatus and the moving apparatus to collaborate to execute the plurality of sub-tasks to complete the target task includes: for each sub-task of the plurality of sub-tasks, determining moving information of the moving apparatus and gripping information of the gripping apparatus based on the sub-task; and executing the sub-task based on the moving information and the gripping information to complete the target task.

According to one or more embodiments of the present application, executing the sub-task based on the moving information and the gripping information includes: controlling the moving apparatus to move based on the moving information, causing the moving apparatus to move to a corresponding object of the sub-task; and controlling the gripping apparatus to grip the object based on the gripping information to execute the sub-task.

According to one or more embodiments of the present application, the moving information includes: a target location of the corresponding object of the sub-task and an initial location of the moving apparatus; and controlling the moving apparatus to move based on the moving information includes: controlling the moving apparatus to move from the initial location to the target location of the corresponding object of the sub-task.

According to one or more embodiments of the present application, determining the target object information required for completing the target task based on the target task includes: obtaining user feature information of a related person; and determining the target object information required for completing the target task based on the user feature information and the target task.

According to one or more embodiments of the present application, determining the target object information required for completing the target task based on the user feature information and the target task includes: determining an object preference of a user based on the user feature information and the target task; and determining the target object information required for completing the target task based on the object preference.

According to one or more embodiments of the present application, an apparatus for task execution is provided, including: an obtaining unit configured to obtain a target task; a determining unit configured to determine target object information required for completing the target task based on the target task, the target object information including at least one object; a generating unit configured to generate a plurality of sub-tasks to be executed for completing the target task based on the target object information, each sub-task including operation action information for a corresponding object; and a control unit configured to control a gripping apparatus and a moving apparatus to collaborate to execute the plurality of sub-tasks to complete the target task.

According to one or more embodiments of the present application, the apparatus is further configured to: obtain requirement information input by a related person; and determine the target task based on the requirement information.

According to one or more embodiments of the present application, the apparatus is further configured to: obtain an execution process for completing the target task; and present the target object information and the execution process.

According to one or more embodiments of the present application, the apparatus, when configured to generate the plurality of sub-tasks to be executed for completing the target task based on the target object information, is specifically configured to: obtain a plurality of predetermined action operation templates; and input the plurality of action operation templates, the target object information, and the target task into a predetermined sub-task generation model to obtain the plurality of sub-tasks to be executed for completing the target task.

According to one or more embodiments of the present application, the apparatus, when configured to control the gripping apparatus and the moving apparatus to collaborate to execute the plurality of sub-tasks to complete the target task, is specifically configured to: for each sub-task of the plurality of sub-tasks, determine moving information of the moving apparatus and gripping information of the gripping apparatus based on the sub-task; and execute the sub-task based on the moving information and the gripping information to complete the target task.

According to one or more embodiments of the present application, the apparatus, when configured to execute the sub-task based on the moving information and the gripping information, is specifically configured to: control the moving apparatus to move based on the moving information, causing the moving apparatus to move to a corresponding object of the sub-task; and control the gripping apparatus to grip the object based on the gripping information to execute the sub-task.

According to one or more embodiments of the present application, the moving information includes: a target location of the corresponding object of the sub-task and an initial location of the moving apparatus; and the apparatus, when configured to control the moving apparatus to move based on the moving information, is specifically configured to: control the moving apparatus to move from the initial location to the target location of the corresponding object of the sub-task.

According to one or more embodiments of the present application, the apparatus, when configured to determine the target object information required for completing the target task based on the target task, is specifically configured to: obtain user feature information of a related person; and determine the target object information required for completing the target task based on the user feature information and the target task.

According to one or more embodiments of the present application, the apparatus, when configured to determine the target object information required for completing the target task based on the user feature information and the target task, is specifically configured to: determine an object preference of a user based on the user feature information and the target task; and determine the target object information required for completing the target task based on the object preference.

According to one or more embodiments of the present application, an electronic device is provided, including: a processor; and a memory configured to store executable instructions of the processor, where the processor is configured to perform the aforementioned methods by executing the executable instructions.

According to one or more embodiments of the present application, a computer-readable storage medium is provided, having a computer program stored thereon, where, the computer program when executed by a processor implements the aforementioned methods.

Those of ordinary skill in the art may be aware that the modules and algorithm steps of the various examples described in conjunction with the embodiments disclosed herein may be implemented in electronic hardware, or a combination of computer software and electronic hardware. Whether these functions are performed in hardware or software depends on the specific application and design constraints of the technical solution. Professional technicians can use different methods for each specific application to implement the described functions, but such implementation should not be considered to be beyond the scope of the present application.

In several embodiments provided by the present application, it should be understood that the disclosed systems, apparatuses, and methods may be implemented in other ways. For example, the above-described apparatus embodiments are only schematic. For example, the division of modules is only a logical function division, and there may be other division methods in actual implementation. For example, multiple modules or components may be combined or integrated into another system, or some features may be ignored or not executed. Another point is that the mutual coupling or direct coupling or communication connection shown or discussed may be indirect coupling or communication connection through some interfaces, apparatuses or modules, which may be electrical, mechanical or other forms.

The modules described as separate components may or may not be physically separated, and the components displayed as modules may or may not be physical modules, that is, they may be located in one place or distributed to multiple network units. Some or all of the modules may be selected according to actual needs to achieve the purpose of the solution of the embodiments. For example, the functional modules in the various embodiments of the present application may be integrated in one processing module, or each module may exist physically alone, or two or more modules may be integrated in one module.

The above are only specific implementations of the present application, but the protection scope of the present application is not limited to this. Any person skilled in the art can easily think of changes or substitutions within the technical scope disclosed in the present application, and all of them should be covered within the protection scope of the present application. Therefore, the protection scope of the present application should be subject to the protection scope of the claims.

## Claims

1. A method of task execution, applicable to an intelligent robot, the method comprising:
obtaining (S201) a target task;
determining (S202) target object information required for completing the target task based on the target task, the target object information comprising at least one object;
generating (S203) a plurality of sub-tasks to be executed for completing the target task based on the target object information, each sub-task comprising operation action information for a corresponding object; and
controlling (S204) a gripping apparatus and a moving apparatus to collaborate to execute the plurality of sub-tasks to complete the target task.

2. The method according to claim 1, further comprising:
obtaining requirement information input by a related person; and
determining the target task based on the requirement information.

3. The method according to claim 1, further comprising:
obtaining an execution process for completing the target task; and
presenting the target object information and the execution process.

4. The method according to claim 1, wherein generating (S203) the plurality of sub-tasks to be executed for completing the target task based on the target object information comprises:
obtaining a plurality of predetermined action operation templates; and
inputting the plurality of action operation templates, the target object information, and the target task into a predetermined sub-task generation model to obtain the plurality of sub-tasks to be executed for completing the target task.

5. The method according to claim 1, wherein controlling (S204) the gripping apparatus and the moving apparatus to collaborate to execute the plurality of sub-tasks to complete the target task comprises:
for each sub-task of the plurality of sub-tasks,
determining moving information of the moving apparatus and gripping information of the gripping apparatus based on the sub-task; and
executing the sub-task based on the moving information and the gripping information to complete the target task.

6. The method according to claim 5, wherein executing the sub-task based on the moving information and the gripping information comprises:
controlling the moving apparatus to move based on the moving information, causing the moving apparatus to move to a corresponding object of the sub-task; and
controlling the gripping apparatus to grip the object based on the gripping information to execute the sub-task.

7. The method according to claim 6, wherein the moving information comprises: a target location of the corresponding object of the sub-task and an initial location of the moving apparatus; and
controlling the moving apparatus to move based on the moving information comprises: controlling the moving apparatus to move from the initial location to the target location of the corresponding object of the sub-task.

8. The method according to claim 1, wherein determining (S202) the target object information required for completing the target task based on the target task comprises:
obtaining user feature information of a related person; and
determining the target object information required for completing the target task based on the user feature information and the target task.

9. The method according to claim 8, wherein determining the target object information required for completing the target task based on the user feature information and the target task comprises:
determining an object preference of a user based on the user feature information and the target task; and
determining the target object information required for completing the target task based on the object preference.

10. An apparatus for task execution, applied to an intelligent robot, the apparatus comprising:
an obtaining unit (31) configured to obtain a target task;
a determining unit (32) configured to determine target object information required for completing the target task based on the target task, the target object information comprising at least one object;
a generating unit (33) configured to generate a plurality of sub-tasks to be executed for completing the target task based on the target object information, each sub-task comprising operation action information for a corresponding object; and
a controlling unit (34) configured to controlling a gripping apparatus and a moving apparatus to collaborate to execute the plurality of sub-tasks to complete the target task.

11. An electronic device, comprising:
a processor (402); and
a memory (401) configured to store executable instructions of the processor (402),
wherein the processor (402) is configured to perform the method according to any of claims 1 to 9 by executing the executable instructions.

12. A computer-readable storage medium having a computer program stored thereon, wherein, the computer program when executed by a processor (402) implements the method according to any of claims 1 to 9.
